# EUROPÄISCHE PATENTANMELDUNG

(11) **EP 2 292 959 A2**
(43) Veröffentlichungstag der Anmeldung: **09.03.2011**
(21) Anmeldenummer: 10008950.7
(22) Anmeldetag: 27.08.2010
(51) Int. Cl.: F16K 37/00

(54) **Ansteuermodul**

(30) Priorität: 08.09.2009 DE 202009012182 U
(71) Anmelder: Bürkert Werke GmbH, 74653 Ingelfingen (DE)
(72) Erfinder: Bachmann, René, 01454 Schönborn (DE); Brinkmann, Ulrike, 01454 Grosserkmannsdorf (DE); Grosse, Kersten, 01445 Radebeul (DE)
(74) Vertreter: Prinz & Partner

(57) **Zusammenfassung**

Ein Ansteuermodul, vorzugsweise zur Ansteuerung eines Prozessventils hat ein Funktionsteil (10), das für die Funktion des Ansteuermoduls wesentliche Bauteile aufweist, und eine auf das Funktionsteil (10) aufgesetzte Haube (12). Die Haube (12) weist einen aus transparentem Material gebildeten Anzeigebereich auf, dessen Innenseite teilweise mit einer opaken Beschichtung (26) versehen ist.

## Beschreibung

Die Erfindung betrifft ein Ansteuermodul, vorzugsweise zur Ansteuerung eines Prozessventils.

Ansteuermodule für Prozessventile sind bekannt. Diese sind häufig aus mehreren Teilen wie Gehäuseunterteil, Anschlussgehäuse, zylindrischer Hülle und transparentem Deckel aufgebaut. Durch den transparenten Deckel sind optische Signale, z. B. erzeugt von farbigen LEDs, sichtbar. Es sind Ausführungen bekannt, bei denen die Hülle aus Edelstahl gefertigt und mit einem transparenten KunststoffDeckel verschlossen ist. Andere Ausführungen werden im 2-Komponenten-Spritzguss hergestellt.

Aufgabe der Erfindung ist es, ein kostengünstiges Ansteuermodul mit einem Anzeigebereich anzugeben, der wenig Aufwand in der Herstellung erfordert, sich durch hohe mechanische und chemische Beständigkeit auszeichnet und hohen Designansprüchen genügt.

Die Aufgabe wird durch ein Ansteuermodul mit den Merkmalen des Anspruchs 1 gelöst. Vorteilhafte und zweckmäßige Ausgestaltungen des erfindungsgemäßen Ansteuermoduls sind in den Unteransprüchen angegeben.

Das erfindungsgemäße Ansteuermodul, das insbesondere zur Ansteuerung eines Prozessventils vorgesehen ist, umfasst ein Funktionsteil, das für die Funktion des Ansteuermoduls wesentliche Bauteile aufweist, und eine auf das Funktionsteil aufgesetzte Haube. Die Haube weist einen aus transparentem Material gebildeten Anzeigebereich auf, dessen Innenseite teilweise mit einer opaken Beschichtung versehen ist.

Unter einer opaken Beschichtung soll hier eine nicht oder nur eingeschränkt lichtdurchlässige Beschichtung verstanden werden. Der nicht beschichtete Teil des Anzeigebereichs ist dagegen durchlässig für optische Signale, z. B. zur Anzeige des Gerätestatus, des Betriebszustands, etc. Unter dem nicht beschichteten Teil des Anzeigebereichs können auch eine Beschriftung, ein Logo o. ä. eingebracht werden. Die Beschichtung kann je nach Designwunsch metallisch (z. B. Edelstahl-Look) oder mit Farben ausgestaltet sein.

Die Innenbeschichtung hat den Vorteil, dass sie keinen äußeren mechanischen oder chemischen Belastungen ausgesetzt ist, die z. B. mit geforderten Reinigungszyklen einhergehen. Es besteht also keine Gefahr, dass die Beschichtung durch derartige Prozesse beschädigt werden könnte.

Im Gegensatz zu einer Haube, die aus transparentem Material gefertigt und nicht beschichtet ist, sind die innenliegenden (z. B. elektronischen Teile) des Ansteuermoduls durch die erfindungsgemäße Haube besser vor (eventuell zerstörender) UV-Lichteinwirkung geschützt.

Der Anzeigebereich ist vorzugsweise aus einem transparenten Kunststoff gebildet, und die Beschichtung ist auf den Kunststoff aufgebracht. In diesem Fall wird die chemische Beständigkeit der Haube allein durch den verwendeten Kunststoff, und nicht durch die Beschichtung bestimmt, da die infrage kommenden Kunststoffe in der Regel gegenüber Chemikalien wesentlich beständiger sind als das Material der Beschichtung. Die erfindungsgemäße Innenbeschichtung auf einem Kunststoff ist hinsichtlich der Stabilität auch einer Variante, bei der der Kunststoff selbst eingefärbt ist, weit überlegen. Mechanische Festigkeit und chemische Beständigkeit von nicht eingefärbten Kunststoffen sind nämlich wesentlich höher als die der jeweiligen farbigen Compounds.

Gemäß der bevorzugten Ausführungsform der Erfindung weist die Haube einen stirnseitigen Deckelabschnitt und eine aus dem gleichen Material und einstückig mit dem Deckelabschnitt ausgebildete Seitenwand auf. Dadurch entfällt eine zusätzliche Dichtstelle, die bei bekannten Ansteuermodulen zwischen einem Deckel und einem hülsenartigen Gehäuseteil besteht. Außerdem ist im Vergleich zu solchen Modulen der Montageaufwand reduziert.

In Erweiterung des Erfindungsgedankens kann die Haube vollständig aus dem transparenten Material gefertigt und auch die Seitenwand teilweise beschichtet sein, um gezielt bestimmte Objekte oder Bereiche innerhalb der Haube sichtbar zu machen.

In der bevorzugten Ausführungsform der Erfindung ist der Anzeigebereich im Deckelabschnitt vorgesehen.

Zur Ausgabe von optischen Signalen ist unter einer Aussparung der Beschichtung wenigstens eine Lichtquelle angeordnet.

Außerdem kann die Haube zusätzlich unterschiedliche Oberflächen-Rauheiten oder verschiedene, auf der Innenseite der Haube aufgebrachte Oberflächenstrukturen aufweisen, um besondere optische Gestaltungen zu verwirklichen.

Vorteilhaft ist eine Ausführungsform, bei der die Haube mit dem Funktionsteil lösbar verbunden ist, insbesondere mittels eines Bajonettverschlusses. Dies ermöglicht ein Abnehmen der Haube bei Bedarf, insbesondere zu Wartungszwecken, um die im Funktionsteil montierten Bauteile, z. B. Ventile, auszutauschen oder auch manuell zu betätigen.

Um ein unberechtigtes Öffnen des Ansteuermoduls nachzuweisen, können an der Haube und dem Funktionsteil außen Fortsätze zur Nutzung als Verplombung angeformt sein. Die Innenbeschichtung der Haube ist hiervon nicht betroffen.

Vorteilerhafterweise weist das Funktionsteil die fluidischen und/oder elektrischen Anschlüsse des Ansteuermoduls auf, sodass die Haube eine unkomplizierte Kontur haben kann, die sich einfach beschichten lässt.

Der bevorzugte Aufbau des erfindungsgemäßen Ansteuermoduls sieht vor, dass auf der von der Haube abgewandten Seite des Funktionsteils ein Gehäuseunterteil befestigt ist.

Gemäß dem bevorzugten Aufbau weist das Gehäuseunterteil eine Schnittstelle für den Anschluss eines Prozessventils auf.

Um dem Ansteuermodul insgesamt ein hochwertiges und einheitliches Äußeres zu verleihen, kann auch das Gehäuseunterteil aus transparentem Material mit oder ohne oder teilweiser Beschichtung gebildet sein.

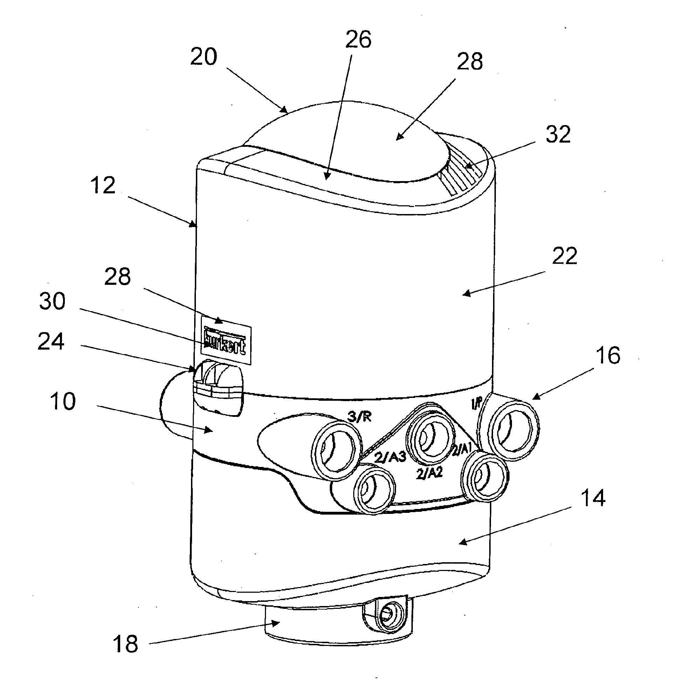

Die Erfindung wird nachfolgend anhand einer bevorzugten Ausführungsform unter Bezugnahme auf die beigefügte Zeichnung im Detail beschrieben. In der Zeichnung zeigt die einzige Figur eine Perspektivansicht eines erfindungsgemäßen Ansteuermoduls.

Das in der Figur gezeigte, im Wesentlichen zylindrisch geformte Ansteuermodul ist im Wesentlichen aus drei Teilen zusammengesetzt: einem Funktionsteil 10, einer auf eine erste Seite des Funktionsteils 10 aufgesetzten Haube 12 und einem auf der entgegengesetzten Seite des Funktionsteils 10 befestigten Gehäuseunterteil 14.

Das Funktionsteil 10 enthält die meisten der für die Funktion des Ansteuermoduls wesentlichen Bauteile (Ventile, etc.). Außerdem weist das Funktionsteil 10 fluidische (z. B. pneumatische) und/oder elektrische Anschlüsse 16 auf, weshalb es auch als Anschlussgehäuse bezeichnet werden kann.

Das Gehäuseunterteil 14 weist eine Schnittstelle 18 auf, an die ein Prozessventil angeschlossen werden kann.

Das Funktionsteil 10 und das Gehäuseunterteil 14 sind gegeneinander abgedichtet und über innen liegende Schrauben aneinander befestigt.

Die Haube 12 weist einen stirnseitigen Deckelabschnitt 20 und eine sich davon erstreckende zylindrische Seitenwand 22 auf, deren axiale Abmessung mit der des Funktionsteils 10 oder des Gehäuseunterteils 14 vergleichbar oder größer ist, wodurch sich die Haube 12 von den Deckeln bekannter Ansteuermodule unterscheidet. Die Kontur der Seitenwand 22 ist auf die des Funktionsteils 10 abgestimmt.

Die Haube 12 ist mit dem Funktionsteil 10 fest, aber lösbar verbunden, z. B. mittels eines Bajonettverschlusses, sodass die Haube 12 bei Bedarf abgenommen werden kann. An der Haube 12 und dem Funktionsteil 10 sind außen Fortsätze angeformt, die optional als Verplombung 24 genutzt werden können

Die Haube 12 ist vollständig aus einem transparenten Material gefertigt, insbesondere aus einem lichtdurchlässigen Kunststoff. Im Deckelabschnitt 20 ist ein Anzeigebereich vorgesehen, der von innen teilweise beschichtet ist. Die Beschichtung 26 ist opak, d. h. nicht oder nur eingeschränkt lichtdurchlässig, und weist eine oder mehrere Aussparungen 28 auf.

Wenigstens eine Aussparung 28 wird als Fenster genutzt, durch das optische Signale sichtbar sind. Die optischen Signale werden von Lichtquellen auf dem Funktionsteil 10, vorzugsweise LEDs, erzeugt, die innerhalb der Haube 12 unter der Aussparung 28 angeordnet sind. Die optischen Signale geben insbesondere den Gerätestatus, wie etwa eine Stellungsrückmeldung eines an das Ansteuermodul angeschlossenen Prozessventils, oder den Betriebszustand des Ansteuermoduls (an/aus) an.

Die Beschichtung 26 kann auch über den Anzeigebereich hinaus reichen und die Seitenwand 22 (teilweise) einschließen. Weitere Aussparungen 28 der Beschichtung 26 können zur Sichtbarmachung eines Firmenlogos 30 und/oder weiterer gewünschter Kennzeichen 32 genutzt werden.

Bei anderen Ausführungsformen ist nur der Anzeigebereich aus transparentem Material gebildet und teilweise beschichtet.

Der teilweise transparente Anzeigebereich wird entweder gefertigt, indem während eines Beschichtungsprozesses bestimmte Bereiche maskiert und damit von der Beschichtung ausgenommen werden, oder die Innenseite der Haube 12 wird zunächst vollständig beschichtet, und erst im Anschluss wird die Beschichtung 26 in den gewünschten Bereichen selektiv abgetragen, beispielsweise mithilfe eines Lasers.

Zusätzlich sind optische Gestaltungen möglich, die beispielsweise durch unterschiedliche Oberflächen-Rauheiten oder Aufbringen verschiedener Oberflächenstrukturen auf der Innenseite der Haube 12 verwirklicht werden können.

Das Funktionsteil 10 wird auf bekannte Weise ohne Beschichtung als Spritzgussteil gefertigt.

Das Gehäuseunterteil 14 kann aber ähnlich wie die Haube 12 aus transparentem Material mit oder ohne oder teilweiser Beschichtung gefertigt werden, sodass sich das Ansteuermodul insgesamt durch ein hochwertiges und einheitliches äußeres Design auszeichnet.

## Patentansprüche

1. Ansteuermodul, vorzugsweise zur Ansteuerung eines Prozessventils, mit einem Funktionsteil (10), das für die Funktion des Ansteuermoduls wesentliche Bauteile aufweist, und
einer auf das Funktionsteil (10) aufgesetzten Haube (12),
**dadurch gekennzeichnet, dass**
die Haube (12) einen aus transparentem Material gebildeten Anzeigebereich aufweist, dessen Innenseite teilweise mit einer opaken Beschichtung (26) versehen ist.

2. Ansteuermodul nach Anspruch 1, **dadurch gekennzeichnet, dass** der Anzeigebereich aus einem transparenten Kunststoff gebildet ist und die Beschichtung auf den Kunststoff aufgebracht ist.

3. Ansteuermodul nach Anspruch 1 oder 2, **dadurch gekennzeichnet, dass** die Haube (12) einen stirnseitigen Deckelabschnitt (20) und eine aus dem gleichen Material und einstückig mit dem Deckelabschnitt (20) ausgebildete Seitenwand (22) aufweist.

4. Ansteuermodul nach Anspruch 3, **dadurch gekennzeichnet, dass** die Haube (12) vollständig aus dem transparenten Material gefertigt ist und auch die Seitenwand (22) teilweise beschichtet ist.

5. Ansteuermodul nach Anspruch 3 oder 4, **dadurch gekennzeichnet, dass** der Anzeigebereich im Deckelabschnitt (20) vorgesehen ist.

6. Ansteuermodul nach einem der vorhergehenden Ansprüche, **dadurch gekennzeichnet, dass** unter einer Aussparung (28) der Beschichtung (26) wenigstens eine Lichtquelle angeordnet ist.

7. Ansteuermodul nach einem der vorhergehenden Ansprüche, **dadurch gekennzeichnet, dass** die Haube unterschiedliche Oberflächen-Rauheiten oder verschiedene auf der Innenseite der Haube (12) aufgebrachte Oberflächenstrukturen aufweist.

8. Ansteuermodul nach einem der vorhergehenden Ansprüche, **dadurch gekennzeichnet, dass** die Haube (12) mit dem Funktionsteil (10) lösbar verbunden ist, insbesondere mittels eines Bajonettverschlusses.

9. Ansteuermodul nach einem der vorhergehenden Ansprüche, **dadurch gekennzeichnet, dass** an der Haube (12) und dem Funktionsteil (10) außen Fortsätze zur Nutzung als Verplombung (24) angeformt sind.

10. Ansteuermodul nach einem der vorhergehenden Ansprüche, **dadurch gekennzeichnet, dass** das Funktionsteil (10) pneumatische und/oder elektrische Anschlüsse (16) aufweist.

11. Ansteuermodul nach einem der vorhergehenden Ansprüche, **dadurch gekennzeichnet, dass** auf der von der Haube (12) abgewandten Seite des Funktionsteils (10) ein Gehäuseunterteil (14) befestigt ist.

12. Ansteuermodul nach Anspruch 11, **dadurch gekennzeichnet, dass** das Gehäuseunterteil (14) eine Schnittstelle 18 für den Anschluss eines Prozessventils aufweist.

13. Ansteuermodul nach Anspruch 11 oder 12, **dadurch gekennzeichnet, dass** das Gehäuseunterteil (14) aus transparentem Material mit oder ohne oder teilweiser Beschichtung gebildet ist.
